# EUROPEAN PATENT SPECIFICATION

(11) **EP 4 098 604 B1**
(45) Date of publication and mention of the grant of the patent: **27.12.2023**
(21) Application number: 21177398.1
(22) Date of filing: 02.06.2021
(51) Int. Cl.: B68G 15/00, B68G 9/00, A47C 27/06, B21F 33/00

(54) **MULTI-LAYERED POCKET SPRING STRAND ASSEMBLY**
MEHRSCHICHTIGE TASCHENFEDERSTRANGANORDNUNG
ENSEMBLE BRINS À RESSORTS ET POCHE MULTICOUCHE

(43) Date of publication of application: 07.12.2022
(73) Proprietor: Spühl GmbH, 9300 Wittenbach (CH)
(72) Inventor: LIECHTI, Urs, 9403 Goldach (CH); REUT, Mario, 9220 Bischofszell (CH); BAUER, Bernhard, 9242 Oberuzwil (CH); KLARER, Matias, 9000 St. Gallen (CH)
(74) Representative: Banzer, Hans-Jörg

(56) References cited:
- WO-A1-03/096847
- WO-A1-2015/004154
- WO-A1-2017/036198
- WO-A1-2018/000751
- JP-A- 2001 145 545

## Description

### FIELD OF THE INVENTION

The present invention relates to a machine for assembly of multi-layer strands of pocketed springs and to a method of assembling multi-layer strands of pocketed springs.

### BACKGROUND OF THE INVENTION

In bedding or seating products, it is known to utilize multi-layered arrangements of spring cores, e.g., including multiple layers of pocketed springs. For example, DE 10 2010 060 B4 describes a spring core having a first layer of spring elements and a second layer of spring elements. The two layers each consist of rows of spring elements which are fixed to each other. Further, the two layers may be fixed to each other, e.g., by gluing. The spring elements of the two layers may have different characteristics, which allows for tailoring overall characteristics of the spring core.

However, manufacture of such multi-layer spring core is typically a rather laborious process and may require manual intervention when connecting the layers to each other. WO 2015/004154 A1 describes a method of manufacturing a spring core in which multiple strands of pocketed springs are automatically joined on top of each other by gluing. However, such joining by gluing may alter characteristics of the pocket material in an undesirable manner, e.g., concerning flexibility or permeability.

Accordingly, there is a need for techniques which allow for efficiently forming multi-layer arrangements of pocketed springs.

### BRIEF SUMMARY OF THE INVENTION

The present invention provides a machine according to claim 1, a method according to claim 10, and a spring core unit according to claim 13. The dependent claims define further embodiments.

Accordingly, an embodiment of the invention provides a machine for forming a multi-layer strand of pocketed springs is provided. The machine comprises an alignment mechanism for receiving a first strand of pocketed springs and a second strand of pocketed springs. The alignment mechanism is configured to align a first pocketed spring of the first strand in a coaxial manner with a second pocketed spring of the second strand. The alignment is performed in such a way that a first seam portion of pocket material at an end of the first pocketed spring overlaps with a second seam portion at an opposing end of the second pocketed spring. The seam portions may for example be so-called pig ears which are formed in the pocket material when closing a pocket with enclosed spring. Further, the machine comprises a welding mechanism configured to weld the first seam portion to the second seam portion. Accordingly, a connection between the first strand and the second strand may be formed in an efficient manner by welding, without requiring additional material or chemicals to form the connection.

According to an embodiment, the welding mechanism is based on welding of the first seam portion and the second seam portion between an anvil and a welding tool. For example, the welding mechanism may be based on ultrasonic welding, and the welding tool can be an ultrasonic horn.

According to an embodiment, the anvil engages between the first pocketed spring and an adjacent pocketed spring of the first strand and between the second pocketed spring and an adjacent pocketed spring of the second strand. In this way, the anvil may support the alignment of the first pocketed spring and the second pocketed spring.

According to an embodiment, the anvil is mounted on a wheel and rotation of the wheel causes transport of the first strand and the second strand between an input and an output of the machine. In this way, the anvil may efficiently contribute to transport of the first strand and the second strand into the machine and to transport of the multi-layer strand out of the machine. By being mounted on the wheel, the anvil will move along a circular trajectory, which enables efficiently combining movement of the anvil to engage between the adjacent first and second pocketed springs, to transport the strand while the anvil is engaged between the adjacent first and second pocketed springs, and to then disengage from between the adjacent first and second pocketed springs.

According to an embodiment, the machine further comprises support elements which are mounted on the wheel. The support elements may be configured to engage between the first pocketed spring and an adjacent pocketed spring of the first strand and between the second pocketed spring and an adjacent pocketed spring of the second strand. The support elements may be adjustable, e.g., in a radial direction of the wheel and/or in a circumferential direction of the wheel. In this way, the support elements may be adjusted to accommodate and reliably support different sizes of the first pocketed springs and the second pocketed springs. The support elements may comprise a first pair of support elements for the first strand and a second pair of support elements for the second strand. A first support element of the first pair may support the first pocketed spring of the first strand, while a second support element of the first pair supports the adjacent pocketed spring of the first strand. Similarly, a first support element of the second pair may support the first pocketed spring of the second strand, while a second support element of the second pair supports the adjacent pocketed spring of the second strand. The support elements may have a shape of blades extending parallel to the axis of the pocketed spring elements.

According to an embodiment, the alignment mechanism is configured to align each of multiple first pocketed springs of the first strand with a corresponding one of multiple pocketed springs of the second strand so that, for each pair of first pocketed spring and corresponding second pocketed spring, a first seam portion of pocket material at an end of the first pocketed spring overlaps with a second seam portion at an end of the corresponding second pocketed spring. Accordingly, multiple pairs of aligned first and second pocketed springs may be formed before welding the overlapping seam portions. In such case, the welding process may be parallelized. For this purpose, the welding mechanism may include multiple welding tools cooperating with multiple anvils. Each of the multiple welding tools may be configured to cooperate with one of the anvils to weld the overlapping first and second seam portions of a corresponding pair of the aligned first and second pocketed springs. The anvils may engage between adjacent pairs of the aligned first and second pocketed springs, and the anvils may be mounted on a wheel. As explained above, rotation of the wheel may cause transport of the first strand and the second strand between an input and an output of the machine.

According to an embodiment, the welding tools are each provided with a drive mechanism for driving movement of the welding tool with respect to the corresponding anvil. In the above-mentioned case of mounting the anvils on a wheel, the movements of the welding tools may be along radial directions with respect to a center of rotation of the wheel.

According to an embodiment, the alignment mechanism comprises a first guide member for guiding transport of the first strand of pocketed springs towards the welding mechanism, and a second guide member for guiding transport of the second strand of pocketed springs towards the welding mechanism. The first guide member and the second guide member may converging at an angle towards a position where the first pocketed spring of the first strand and the second pocketed spring of the second strand become aligned. In this way, it can be achieved that the first and second seam portions are brought to overlap in a precise and controlled manner.

A further embodiment of the invention provides a method of forming a multi-layer strand of pocketed springs. The method may for example be performed by the machine according to any of the above embodiments. The method comprise receiving a first strand of pocketed springs and a second strand of pocketed springs. While being received, the first strand and the second strand can for example be guided by the above-mentioned guide elements. Further, the method comprises aligning a first pocketed spring of the first strand in a coaxial manner with a second pocketed spring of the second strand so that a first seam portion of pocket material at an end of the first pocketed spring overlaps with a second seam portion at an end of the second pocketed spring, e.g., using the above-mentioned alignment mechanism. Further, the method comprises welding the first seam portion to the second seam portion, e.g., using the above-mentioned welding mechanism.

In the method, the welding of the first and second seam portions may be based on welding of the first seam portion and the second seam portion between an anvil and a welding tool. The anvil may engage between the first pocketed spring and an adjacent pocketed spring of the first strand and between the second pocketed spring and an adjacent pocketed spring of the second strand. In some cases, the anvil may be mounted on a wheel and the method may further comprises rotation of the wheel to transport of the first strand and the second strand.

According to an embodiment, the method may comprise aligning each of multiple first pocketed springs of the first strand with a corresponding one of multiple pocketed springs of the second strand so that, for each pair of first pocketed spring and corresponding second pocketed spring, a first seam portion of pocket material at an end of the first pocketed spring overlaps with a second seam portion at an end of the corresponding second pocketed spring. Then, by using multiple welding tools cooperating with multiple anvils, the overlapping first and second seam portions of multiple pairs of the aligned first and second pocketed springs may be welded together.

A further embodiment of the invention provides a spring core unit. The spring core unit may be produced by the above-mentioned machine or method. The spring core unit comprises at least one multi-layer strand of pocketed springs. The multi-layer strand comprises at least a first strand of pocketed springs and a second strand of pocketed springs. At least one first pocketed spring of the first strand is aligned in a coaxial manner with a corresponding second pocketed spring of the second strand so that a first seam portion of pocket material at an end of the first pocketed spring overlaps with a second seam portion at an opposing end of the corresponding second pocketed spring. The first seam portion is welded to the second seam portion to connect the first strand to the second strand.

According to an embodiment, the spring core unit may comprise multiple multi-layer strands of pocketed springs, with each of the multi-layer strands comprising at least a first strand of pocketed springs and a second strand of pocketed springs. In each of the multi-layer strands, at least one first pocketed spring of the first strand is aligned in a coaxial manner with a corresponding second pocketed spring of the second strand so that a first seam portion of pocket material at an end of the first pocketed spring overlaps with a second seam portion at an end of the corresponding second pocketed spring, and the first seam portion is welded to the second seam portion to connect the first strand to the second strand. In this case, at least some of the multi-layer strands may differ from each other with respect to at least one characteristic of the pocketed springs of the first strand and/or at least one characteristic of the pocketed springs of the second strand. For example, the multi-layer strands could differ with respect to one or more characteristics selected from a height of the pocketed springs of the first strand, a height of the pocketed springs of the second strand, a spring constant of the pocketed springs of the first strand, a spring constant of the pocketed springs of the second strand, a shape of the pocketed springs of the first strand, and a shape of the pocketed springs of the second strand. By having such multiple multi-layer strands, the spring core unit may be efficiently provided with multiple zones having tailored characteristics. In addition or as an alternative, at least some of the multi-layer strands could differ from each other with respect to the number of layers, i.e., the number of strands of pocketed springs connected on top of each other.

In addition or as an alternative, the spring core unit may comprise at least one multi-layer strand of pocketed springs which comprises a first strand of pocketed springs, a second strand of pocketed springs, and a third strand of pocketed springs. These may be connected in the same way as described above for the first strand and second strand. That is to say, at least one first pocketed spring of the first strand is aligned in a coaxial manner with a corresponding second pocketed spring of the second strand and a corresponding third pocketed spring of the third strand, so that a first seam portion of pocket material at an end of the first pocketed spring overlaps with a second seam portion at an end of the corresponding second pocketed spring and a third seam portion of pocket material at another end of the corresponding second pocketed spring overlaps with a fourth seam portion at an end of the corresponding third pocketed spring. The first seam portion is welded to the second seam portion to connect the first strand to the second strand and the third seam portion is welded to the fourth seam portion to connect the second strand to the third strand. In a similar manner, the at least one multi-layer strand could also be provided with four or more layers formed by strands of pocketed springs connected on top of each other.

### BRIEF DESCRIPTION OF DRAWINGS

Embodiments of the invention will be described with reference to the accompanying drawings.
Figs. 1 schematically illustrates a multi-layer spring core unit according to an embodiment.
Figs. 2A and 2B schematically illustrate formation and structure of a multi-layer strand of pocketed springs in the spring core unit.
Fig. 3 schematically illustrates an example of a machine according to an embodiment.
Figs. 4A, 4B, 4C, and 4D schematically illustrate a process for forming a multi-layer strand of pocketed springs according to an embodiment.
Figs. 5A, 5B, and 5C schematically illustrate support elements as used according to an embodiment.
Fig. 6 schematically illustrates an example of a further machine according to an embodiment.
Fig. 7 schematically illustrates a further example of a multi-layer strand of pocketed springs in the spring core unit.
Fig. 8 schematically illustrates an example of a spring core unit having multiple zones.
Fig. 9 shows a flowchart for illustrating a method according to an embodiment.

### DETAILED DESCRIPTION OF EMBODIMENTS

Exemplary embodiments of the invention will be described with reference to the drawings. In particular, concepts illustrated in the following relate to a machine and processes for producing a multi-layer strand of pocketed springs, as well as to a spring core including one or more such multi-strands. The spring core may for example be used in a mattress or other type of bedding or seating product, e.g., a boxspring or a sofa. The pocketed springs considered in the illustrated examples may correspond to various types of spring enclosed by a pocket material, e.g., coil springs formed of steel, another metal, or of a plastic material. Further, the springs could also consist of elastic foam or gel material, e.g., in the form of pegs. The pocket material may be a nonwoven fabric. The pocket material may be welded along at least one seam to form the pocket.

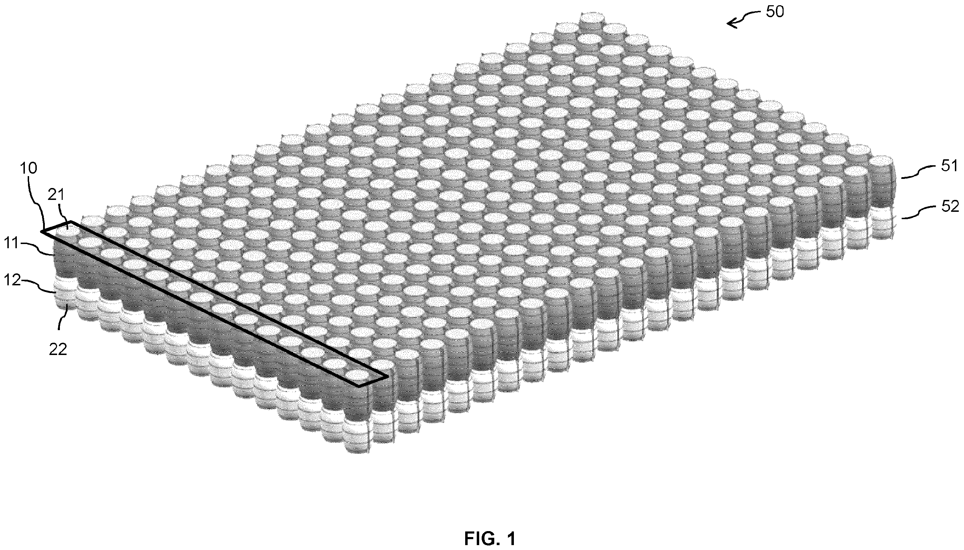

Fig. 1 schematically illustrates a multi-layer spring core 50, e.g., to be used in a mattress. The spring core 50 includes an upper layer 51 of pocketed springs 21 and a lower layer 52 of pocketed springs 22. The pocketed springs 21 of the upper layer 51 and the pocketed springs 22 of the lower layer 52 may have different characteristics, e.g., hardness or height. In this way, the overall characteristics of the spring core 50 can be tailored in a precise and flexible manner.

As further illustrated, the spring core 50 is formed of multiple rows of pocketed springs 21, 22. Each of these rows correspond to a multi-layer strand 10 of pocketed springs 21, 22. The spring core 50 is formed by assembling multiple multi-layer strands 10 next to each other. In the illustrated example, these multi-layer strands 10 are assumed to each have the same configuration. However, it would also be possible to form the spring core 50 of multi-layer strands 10 having different configurations, e.g., concerning a heights or types of the pocketed springs 21, 22. Still further, the spring core 50 could also include rows with single layer strands of pocketed springs or rows with multi-layer strands having more than two layers of pocketed springs.

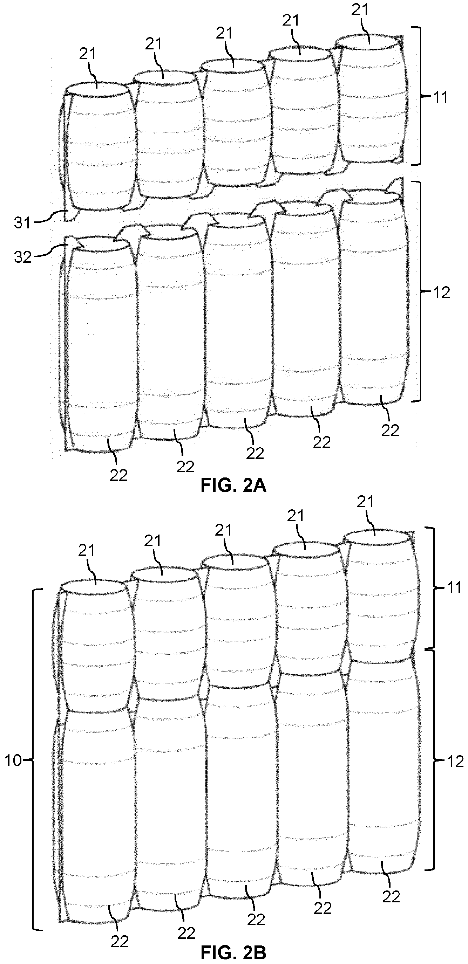

Figs. 2A and 2B schematically illustrate formation and structure of the multi-layer strand 10. As illustrated, the multi-layer strand 10 is formed by connecting a first strand 11 of pocketed springs 21 and a second strand of pocketed springs 22. Fig. 2A shows the strands 11, 12 before being connected. Fig. 2B shows the strands 11, 12 after being connected to form the multi-layer strand 10.

As illustrated in Fig. 2A, each of the pocketed springs 21 of the first strand 11 has seam portions 31 protruding at a bottom end of the pocketed spring 21. These seam portions 31 are located in the region between two adjacent pocketed springs 21 and correspond to so-called pig ears resulting from excess pocket material remaining when forming a seam to close the pockets. In a similar manner, each of the pocketed springs 22 of the first strand 12 has seam portions 32 protruding at a top end of the pocketed spring 22. These seam portions 32 are located in the region between two adjacent pocketed springs 22 and correspond to pig ears resulting from excess pocket material remaining when forming a seam to close the pockets. As shown in Fig. 2B, these seam portions 31, 32 are used to connect the first strand 11 and the second strand 12. In particular, in the multi-layer strand 10, a pocketed spring 21 of the first strand 11 is coaxially aligned with a corresponding pocketed spring 22 of the second strand 12, with the bottom end of the first pocketed spring 21 abutting on the top end of the corresponding pocketed spring 22 of the second strand 12. This alignment causes the seam portions 31 of the pocketed springs 21 to overlap with the seam portions 32 of the pocketed springs 22. The connection between the first strand 11 and the second strand is formed by welding at least some of the overlapping seam portions 31, 32 to each other, e.g., using ultrasonic welding.

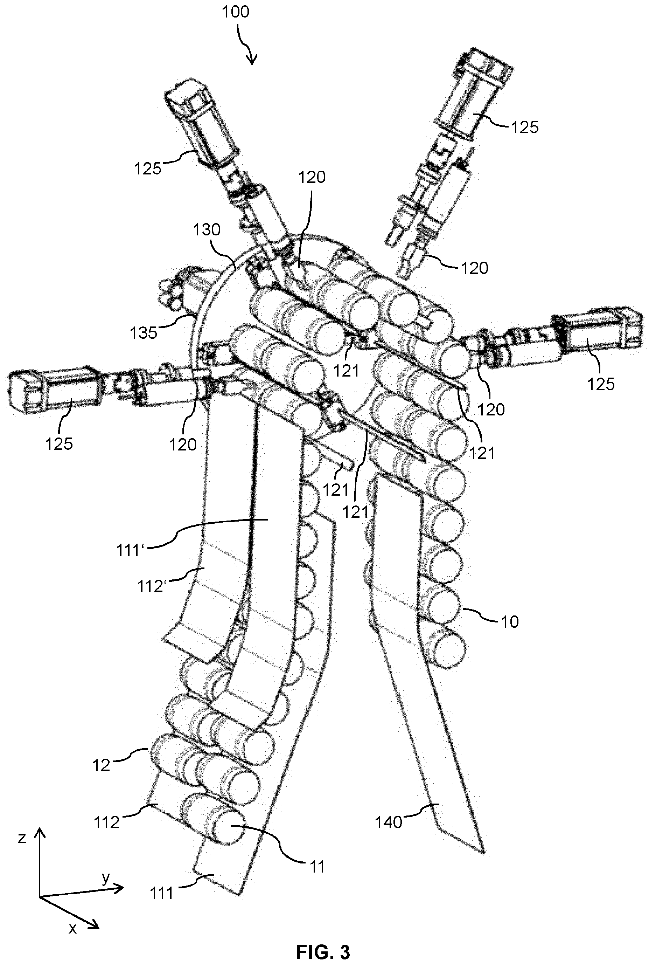

Fig. 3 schematically illustrates an example of a machine 100 for producing the multi-layer strand 10. For the sake of a better overview, a frame and housing of the machine 100, which also support the components of the machine 100 further explained below, are omitted from the illustration. As illustrated, the machine 100 includes guide elements 111, 111', 112, 112' which receive the first strand 11 and the second strand 12 at an input of the machine and guide the strands 11, 12 towards a welding stage. The welding stage includes a set of welding tools 120 which cooperate with a set of anvils 121. In the illustrated example, the welding tools 120 are assumed to be ultrasonic horns. However, utilization of other welding techniques is conceivable as well, e.g., thermal welding. Further, the machine includes a output guide element 140.

The guide elements 111, 111', 112, 112' include a first guide element 111 which guides the first strand 11 and a second guide element 112 for guiding the second strand 12. While being received in the machine, transport of the first strand 11 occurs along the first guide element 111 and transport of the second strand 12 occurs along the second guide element 112. The transport paths of the first strand 11 and the second strand 12 in the machine follow curved trajectories which are perpendicular to the axes of the pocketed springs 21, 22. In the illustration of Fig. 3, the axes of the pocketed springs 21, 22 are assumed to extend along an x-direction, with the trajectories running parallel to a z-y-plane which is perpendicular to the x-axis. Along the x-direction, the trajectory of the first strand 11 and the trajectory of the second strand 12 have an offset. The size of this offset is set to substantially align the bottom ends of the pocketed springs 21 of the first strand 11 with the top ends of the pocketed springs 22 of the second strand 12.

As further illustrated, the first guide element 111 and the second guide element 112 have an angular offset in the z-y plane causing them to converge along the trajectory towards the welding stage. As a result, while the first strand 11 and the second strand 12 are transported towards the welding stage, an axial offset between a pocketed spring 21 of the first strand 11 and a corresponding pocketed spring 22 of the second strand 12 gradually decreases. Before entering the welding stage, the trajectories of the first strand 11 and the second strand meet. At this point, the overlapping seam portions 31, 32 of the pocketed springs 21, 22 become meet so that they can be subsequently welded in the welding stage. The further transport of the first strand 11 and second strand 12 into and through the welding stage occurs along trajectories with coinciding projections to the z-y-plane, so that the alignment of the pocketed springs 21, 22 is maintained. As further, illustrated, the guide elements 111, 111', 112, 112' also include outer guide elements 111', 112'. Together with the guide element 111, the outer guide element 111' forms a guide channel for the first strand 11, and together with the guide element 112, the outer guide element 112' forms a guide channel for the second strand 12. In some scenarios, additional guide elements may be provided to limit the guide channels also along the axes of the pocketed springs 21, 22. This axial limitation may be set to provide a certain degree of pretension of the pocketed springs 21, 22. Due to this pretension, it can be achieved that the bottom ends of the pocketed springs 21 of the first strand 11 and the top ends of the pocketed springs 22 of the second strand 12 are pushed against each other when they become aligned before entering the welding stage. In this way, alignment of the pocketed springs 21, 22 and overlap of the seam portions 31, 32 can be further improved.

In some scenarios, feeding of the first strand 11 and the second strand 12 may be further assisted by an index wheel mechanism, which may help to provide initial alignment of the pocketed springs 21 of the first strand 11 with the corresponding pocketed springs 22 of the second strand 12 along the strands 11, 12.

As further illustrated, the anvils 121 are mounted with regular angular spacing on a wheel 130. The anvils 121 are substantially blade shaped and extend in parallel to the axes of the pocketed springs 21, 22. The wheel 130 is provided with a drive 135 for driving rotation of the wheel 130. The drive 130 can for example be based on an electric stepper motor. The angular spacing and radial position of the anvils 121 on the wheel 130 may be set according to the size of the pocketed springs 21, 22.

Rotation of the wheel 130 causes the anvils 121 to engage between adjacent pocketed springs 21 first strand 11 and corresponding adjacent pocketed springs 22 of the second strand 12. This engagement happens at a point where the pocketed springs 21, 22 leave the guide channels and their transport trajectories tangentially meet the circular trajectory of the anvils 121. The engagement of the anvils between the adjacent pocketed springs 21, 22 also contributes to further aligning the pocketed springs 21 of the first strand 11 with the corresponding pocketed springs 22 of the second strand 12. Further, rotational movement of the wheel 130 while the anvils 121 are engaged between the adjacent pocketed springs 21, 22 causes transport of the strands 11, 12 into and through the machine 100. Here, the wheel 130, with the anvils 121 mounted thereon, operates in a similar manner as an index wheel.

The welding tools 120 are arranged at certain angular positions along a circumference of the wheel 130. These angular positions of the welding tools 120 correspond to angular positions of the anvils 121 on the wheel 130. In the illustrated example, six anvils 121 are mounted on the wheel 130, with a regular angular spacing of 60°. The welding tools 120 are mounted at angular positions corresponding to 0°, 60°, 120°, and 180°. Accordingly, by rotation of the wheel 130, the welding tools 120 can be brought into angular alignment with a correspond number of the anvils 121, and in this rotational position of the wheel 130, welding of the seal portions 31, 32 can be performed in a parallelized manner by substantially simultaneous operation of the multiple welding tools 120. As further illustrated, each of the welding tools 120 is mounted on a linear drive 125. The linear drive 125 is configured to move the welding tool 125 along a radial direction of the wheel 130. Accordingly, when the wheel 130 is in the above-mentioned rotational position where the welding tools 120 are in angular alignment with the anvils 121, the linear drives 125 can be used to move the welding tools 120 towards the respectively aligned anvils 121, bringing the overlapping seam portions 31, 32 between the welding tool 120 and the anvil 121 to perform the welding. After the welding process, the linear drives 125 can be used to retract the welding tools 120 from the anvils 121, so that the wheel 130 can be further rotated for a next welding cycle.

For accommodating different sizes of pocketed springs, some components of the machines may be adjustable. For example, such adjustability may concern the angular positions of the anvils 121 on the wheel 130 and the angular positions of the welding tools 120. Further, such adjustability may concern the radial position of the anvils 121 on the wheel 130. Still further, such adjustability may concern the positions of the guide elements 111, 111', 112, 112'. The adjustability may be based on manual adjustment and/or automated adjustment, e.g., using servo motors or the like.

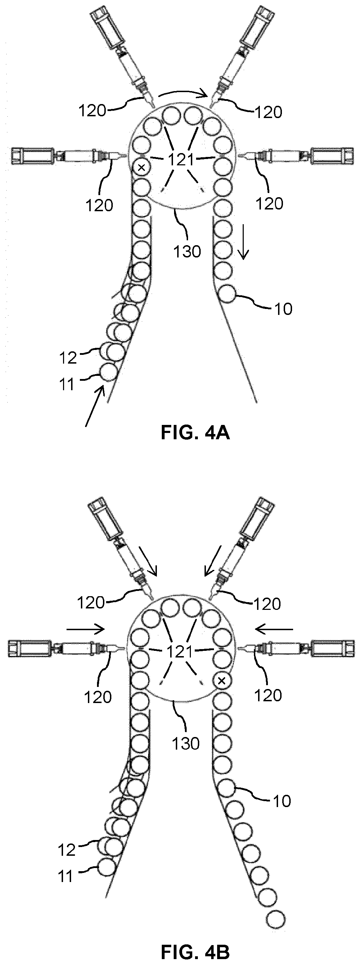

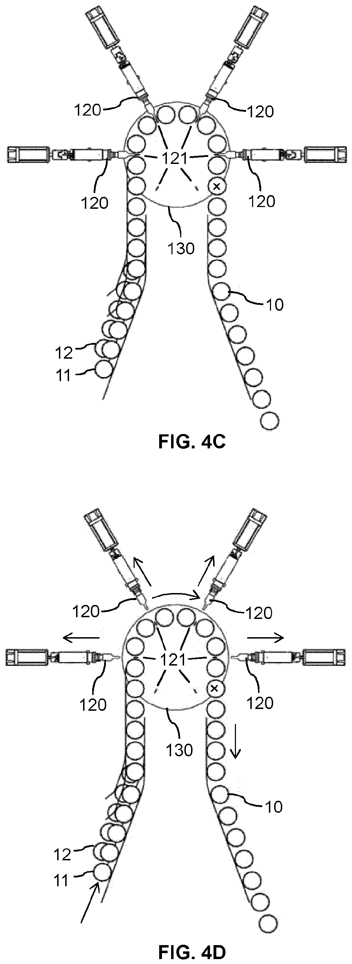

Figs. 4A to 4D schematically illustrate operation of the machine 100 when producing the multi-layer strand 10 of pocketed springs 21, 22. In particular, Figs. 4A, 4B, 4C, and 4D illustrate different stages of an operating cycle of the machine 100.

In operation of the machine 100 an initial setup process may for example involve moving the welding tools 125 to an outermost position, which maximizes free space for other adjustments to be made. Further, the radial position of the anvils 121 can be adjusted depending on the size of the pocketed coils 21, 22 and depending on the number of pocketed coils 21, 22 which should be between two adjacent anvils 121. In the illustrated example, this number is two, which means that welding of the seam portions 31, 32 will be performed at every second pocketed spring 21, 22. Typically, a smaller diameter of the pocketed springs 21, 22 may require positioning the anvils 121 closer to the center of the wheel 130.

Then initial feeding of the strands 11, 12 into the machine 100 can be performed. For this purpose, the strands 11, 12 can be manually engaged with at least some of the anvils 121 on the wheel 130. Then, a fine adjustment of the radial positions of the anvils 121 can be performed. The fine adjustment may have the purpose of causing a slight radial compression of the pocketed springs 21, 22 engaged between two anvils 121. Such radial compression may help to further enhance the overlap of the seam portions 31, 32 to be welded. Then, the guide elements 111, 111', 112, 121 may be adjusted in accordance with the positions of the anvils 121 and the size of the pocketed springs 21, 22. Then the welding tools 120 can be moved back closer to the wheel 130, into an open position which still allows rotation of the wheel 130 with the strands 11, 12 engaged on the anvils 121.

As mentioned above, the machine 100 operates in a cyclic manner, with each cycle involving further transport of the strands 11, 12 through the machine 100 and formation of welds on some of the pocketed springs 21, 22.

Fig. 4A illustrates an initial phase of the cycle, where a certain pair of a pocketed spring 21 of the first strand 11 is axially aligned with a corresponding pocketed spring 22 of the second strand 12 and enters the welding stage. This pair of aligned pocketed springs 21, 22 is marked by an "x". In the phase of Fig. 4A, the welding tools 120 are in the outer position and the wheel 130 is rotated to further transport the strands 11, 12 into and through the machine 100, as indicated by the arrows in Fig. 4A. Fig. 4B shows a subsequent rotational position of the wheel 130, in which there is again angular alignment of the welding tools 120 and anvils 121. In the phase of the cycle illustrated by Fig.4B, the rotational position of the wheel 130 is kept fixed and the welding tools 120 are moved in a radial direction towards the anvils 121, as illustrated by the arrows in Fig. 4B. The radial movement of the welding tools 120 is continued until the welding tools 120 each engage with the corresponding anvil 121, with the overlapping seam portions 31, 32 being compressed between the welding tool 120 and the anvil 121, as illustrated in Fig. 4C. In the phase of the cycle illustrated by Fig. 4C, welding of the overlapping seam portions 31, 32 is performed in a parallelized manner, by substantially simultaneous operation of the multiple welding tools 120. For example, in the cas of ultrasonic welding, this may involve that the overlapping seam portions 31, 32 are spliced together by ultrasonic energy causing friction and heat between the welding tool 120, the fabric of the seam portions 31, 32, and the anvil 121. Subsequently, in a next phase of the cycle, the welding tools 120 are retracted to the open position and the wheel 130 can be further rotated, as illustrated by the arrows in Fig. 4D. The operation may then continue with a next cycle, starting from a situation like in Fig. 4A.

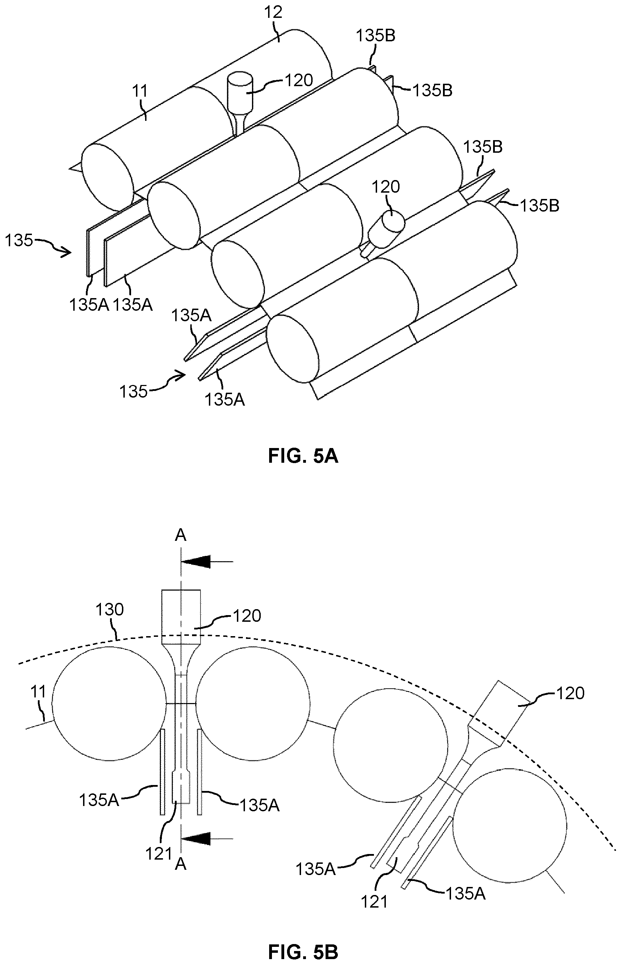

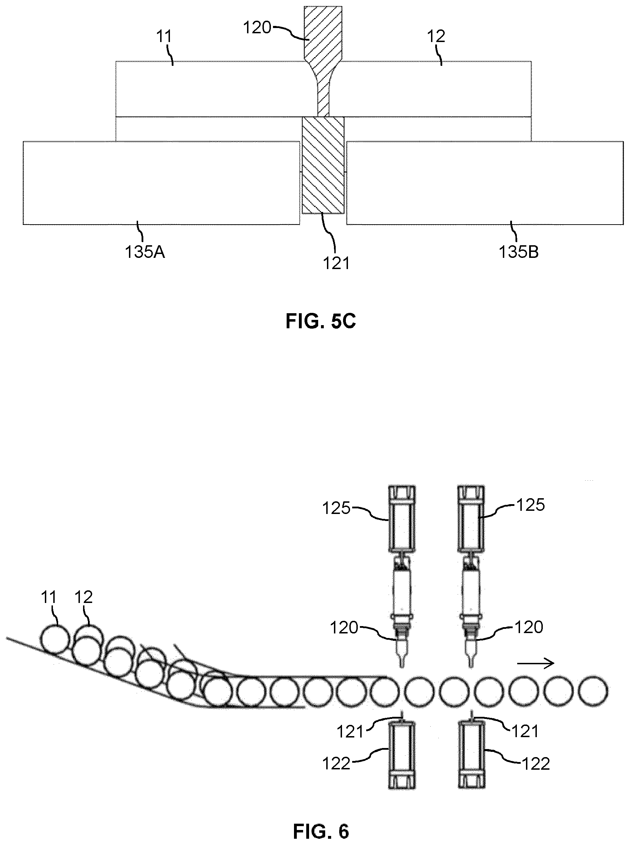

In some scenarios, the machine 100 may further be provided with support elements for supporting the pocketed springs 21, 22 while being transported through the welding stage. An example of such support elements is schematically illustrated in Figs. 5A, 5B, and 5C. In the illustrated example, support elements 135 are mounted on the wheel 130.

Fig. 5A shows a perspective view and Fig. 5B shows a plan view for illustrating structure and operation of the support elements 135. Fig. 5C shows a sectional view along line A-A of Fig. 5C. As can be seen, the support elements 135 engage between adjacent pocketed springs 21 of the first strand and between adjacent pocketed springs 22 of the second strand 22. The support elements 135 are substantially blade shaped and extend along a longitudinal axis of the pocketed springs 21, 22, in parallel to a rotation axis of the wheel which corresponds to a radial direction of the wheel 130.

As further illustrated, the support elements 135 are arranged in pairs. In particular, for two adjacent pocketed springs 21 of the first strand 11, the support elements 135 include a first pair of support elements 135A. The support elements 135A of the first pair are spaced apart with respect to a center position defined by the anvil 121. Further, for two adjacent pocketed springs 22 of the second strand 12, the support elements 135 include a second pair of support elements 135B. The support elements 135B of the second pair are spaced apart with respect to a center position defined by the anvil 121. and engage between two adjacent pocketed springs 22 of the first strand 12. Accordingly, a first support element 135A of the first pair may support one pocketed spring 21 of the first strand 11, while a second support element 135A of the first pair supports the adjacent pocketed spring 21. Similarly, a first support element 135B of the second pair supports one pocketed spring 22 of the second strand 12, while a second support element 135 of the second pair supports the adjacent pocketed spring 22 of the second strand 12.

The support elements 135 may be adjustable, e.g., in a radial direction of the wheel 130 and/or in a circumferential direction of the wheel 130. This adjustability may in particular involve that, in a circumferential direction, the distance between the support elements 135 of a pair is adjusted, e.g., depending on the diameter of the pocketed springs 21, 22 to be supported. Here, the adjustability of the support elements 135A of the first pair may be independent of the adjustability of the second pair 135B. Alternatively or in addition, the adjustability ma involve that the support elements 135 are adjustable in the radial direction, e.g., depending of the height of the pocketed springs 21, 22 to be supported.

In the example of Figs. 3 and 4A to 4D, it was assumed that transport of the strands 11, 12 in the welding stage follows a substantially circular trajectory, using the anvils 121 mounted on the wheel 130 to align and transport the strands 11, 12 in an index wheel like manner. However, other geometries of the welding stage are possible as well. Fig. 6 schematically illustrates a liner geometry of the welding stage, where transport of the strands 11, 12 through the welding stage follows a substantially linear trajectory, as indicated by the arrow in Fig. 6. Also in this case, the welding stage includes multiple welding tools 120 which cooperate with multiple anvils 121. The example of Fig. 6 assumes that the number of welding tools 120 and the number of anvils 121 is two. However, higher numbers could be used as well in order to further parallelize the welding process. Still further, it would also be possible to use only one welding tool 120 and corresponding anvil 121. Also in the example of Fig. 6, the welding tools 120 are mounted on linear drives 125 which allow for moving the welding tool 120 towards the trajectory of the strands 11, 12 and towards the corresponding anvil 121. Further, also the anvils 121 are each mounted on linear drives 122 which allow for moving the welding tool 120 towards the trajectory of the strands 11, 12 and towards the corresponding anvil 121. Accordingly, by operation of the linear drives 122, 125, the welding tools 125 and the corresponding anvils 121 can be moved towards each other so that the overlapping seam portions 31, 32 are compressed between the welding tool 120 and the anvil 121 while performing the welding, and the welding tools 125 and the anvils 121 can be retracted from the strands 11, 12 so as to allow transport of the strands 11, 12 through the machine 100. In the example of Fig. 5, transport of the strands 11, 12 into the machine 100 and transport of the multi-layer strand 10 out of the machine 100 can be achieved on the basis of various kinds of transport mechanisms, e.g., one or more indexed wheels and/or one or more conveyor belts.

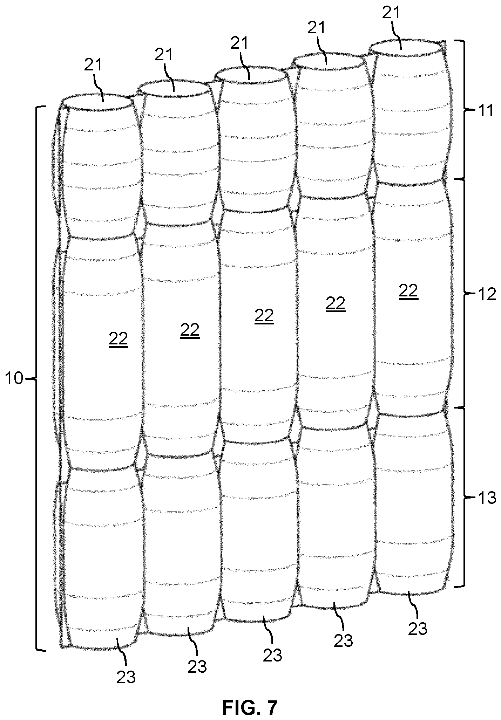

Fig. 7 shows a further example of a multi-layer strand 10 in accordance with the illustrated concepts. Similar to the multi-layer strand 10 illustrated in Fig. 2B, the multi-layer strand 10 of Fig. 7 includes layers formed by a first strand 11 of pocketed springs 21 and a second strand of pocketed springs 22, which are connected to each other by welding seam portions protruding at a bottom end of the pocketed springs 21 to seam portions protruding at a top end of the pocketed springs 22, e.g., using ultrasonic welding. Further, the multi-layer strand 10 of Fig. 7 includes a further layer formed by a third strand 13 of pocketed springs 23. The third strand 13 is connected to the second strand 12 by welding seam portions protruding at a bottom end of the pocketed springs 22 to seam portions protruding at a top end of the pocketed springs 23, e.g., using ultrasonic welding. As explained in connection with Figs. 2A and 2B, the seam portions used to connect the first strand 11, the second strand 12, and the third strand 13 may be located in the region between two adjacent pocketed springs 21, 22, 23 and may correspond to pig ears resulting from excess pocket material remaining when forming a seam to close the pockets.

As can be seen from Fig. 7, each pocketed spring 21 of the first strand 11 is aligned in a coaxial manner with a corresponding second pocketed spring 22 of the second strand 12 and a corresponding third pocketed spring 23 of the third strand 13. As explained in connection with This causes that a seam portion of pocket material at a the bottom end of the pocketed springs 21 to overlap with a seam portion at a top end of the corresponding pocketed spring 22 and a seam portion of pocket material at the bottom end of the pocketed springs 22 to overlap with a seam portion at a top end of the corresponding pocketed spring 23. The overlapping seam portions are welded together to connect the strands 11, 12, 13 to the multi-layer strand 10.

As further illustrated in Fig. 7, at least two of the first strand 11, the second strand 12, and the third strand 13 may differ from each other with respect to one or more characteristics of the pocketed springs 21, 22, 23. For example, the pocketed springs 21 could have a height which differs from the height of the pocketed springs 22 and/or from the height of the pocketed springs 23. In addition or as an alternative, the pocketed springs 21 could have a spring constant which differs from the spring constant of the pocketed springs 22 and/or from the spring constant of the pocketed springs 23.

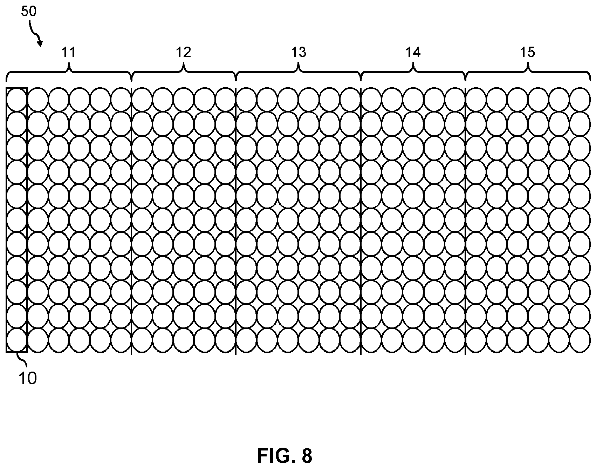

Fig. 8 shows a further example of a spring core unit 50 which is based on combining multiple multi-layer strands 10 of the illustrated concepts. In particular, Fig. 8 an example of using the multi-layer strands 10 to form a spring core unit 50 having multiple zones 11, 12, 13, 14, 15, e.g., corresponding to a head section, a shoulder section, a middle section, a leg section, and a feet section, respectively. The zones 11, 12, 13, 14, 15 may be formed by combining multi-layer strands 10 of different characteristics. In particular, the zone 11 could consist of multi-layer strands 10 of a first type, the zone 12 could consist of multi-layer strands 10 of a second type, the zone 13 could consist of multi-layer strands 10 of a third type, the zone 14 could consist of multi-layer strands 10 of a fourth type, and the zone 15 could consist of multi-layer strands 10 of a fifth type. At least some of these types may be different from each other. However, some of the types could also be the same. For example, the spring core unit 50 could have a symmetrical configuration in which the zone 11 being similar to the zone 15, and the zone 12 being similar to the zone 14. In some scenarios, at least some of the zones 11, 12, 13, 14, 15 may also include single layer strands of pocketed springs, either in combination or as an alternative to the multi-layer strands 10.

Accordingly, the spring core unit 50 of Fig. 8 includes multiple multi-layer strands 10 of pocketed springs, which may each be formed as explained above and may for example have a structure as illustrated in Fig. 2B or Fig. 7. In order to provide the zones 11, 12, 13, 14, 15, at least some of the multi-layer strands 10 may differ from each other, e.g., with respect to at least one characteristic of the pocketed springs used in one or more of the layers and/or with respect to the number of the layers. For example, the multi-layer strands 10 could differ with respect to one or more characteristics selected from a height of the pocketed springs of the strand corresponding to a certain layer, a spring constant of the pocketed springs of the strand corresponding to a certain layer, a shape of the pocketed springs of the strand corresponding to a certain layer, or wire gauge of the pocketed springs of the strand corresponding to a certain layer. Further, in some of the multi-layer strands 10 the number of layers could be two, while in other multi-layer strands 10 the number of layers could be three. If there are differences in overall height between such different multi-layer strands 10, these height differences may be compensated by additional elements, e.g., cushions or additional spring elements. Such additional elements may be glued to the spring core unit 50 or may be inserted into the product, e.g., mattress formed of the spring core unit 50.

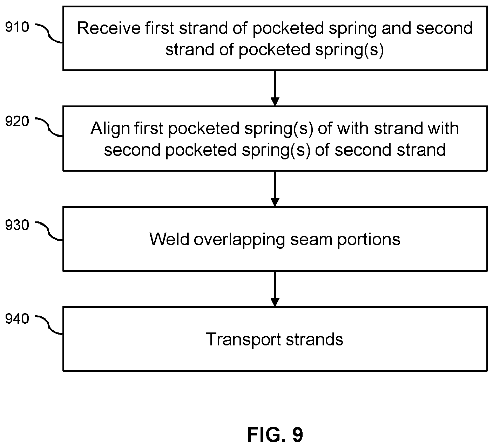

Fig. 9 shows a flowchart for illustrating a method of forming a multi-layer strand of pocketed springs. The method of Fig. 9 may be performed by the above-described machine 100.

At block 910, at least a first strand of pocketed springs and a second strand of pocketed springs are received, such as the above-mentioned strands 11, 12, 13 of pocketed springs 21, 22, 23. While being received, the first strand and the second strand can for example be guided by guide elements, such as the above-mentioned guide elements 111, 111', 112, 112'.

At block 920, a first pocketed spring of the first strand is aligned in a coaxial manner with a second pocketed spring of the second strand so that a first seam portion of pocket material at an end of the first pocketed spring overlaps with a second seam portion at an end of the second pocketed spring. The seam portions may correspond to excess pocket material protruding at the end of the pocketed spring and may be formed when forming a seam to close a pocket of the pocketed springs, such as explained for the above-mentioned pig-ear like seam portions 31, 32. The alignment of block 920 can be performed by an alignment mechanism. The alignment mechanism may include the above-mentioned guide elements 111, 111', 112, 112' and parts of a transport mechanism for transporting the strands, e.g., an index wheel or the above-mentioned anvils 121 engaging between adjacent pocketed springs 21, 22. In some scenarios, block 920 may involve aligning each of multiple first pocketed springs of the first strand with a corresponding one of multiple pocketed springs of the second strand so that, for each pair of first pocketed spring and corresponding second pocketed spring, a first seam portion of pocket material at an end of the first pocketed spring overlaps with a second seam portion at an end of the corresponding second pocketed spring.

At block 930, the first seam portion is welded to the second seam portion, e.g., using the above-mentioned welding mechanism. The welding of the first and second seam portions may be based on welding of the first seam portion and the second seam portion between an anvil and a welding tool, e.g., as explained for the above-mentioned welding tools 125 and anvils 121. The welding may be based on ultrasonic welding, and the welding tool may then correspond to an ultrasonic horn. The anvil may engage between the first pocketed spring and an adjacent pocketed spring of the first strand and between the second pocketed spring and an adjacent pocketed spring of the second strand. In some scenarios, the welding of block 930 may be performed using multiple welding tools cooperating with multiple anvils. In this case, the overlapping first and second seam portions of multiple pairs of the aligned first and second pocketed springs may be welded together in a parallelized or substantially simultaneous manner.

At block 940, the first strand and the second strand may be transported. As for example explained in connection with Figs. 3 and 4A to 4D, this may involve that the anvil is mounted on a wheel and rotation of the wheel causes transport of the first strand and the second strand due to engagement of the anvil between adjacent pocketed springs of the first strand and between adjacent pocketed springs of the second strand. In particular, the anvil mounted on the wheel may operate similar to an index wheel to transport the first and second strand.

The method of Fig. 9 may also be used to form a multi-layer strand having more than two layers, e.g., three layers. This may for example be achieved by aligning more than two pocketed springs on top of each other and then connecting the overlapping seam portions at the interfaces between the aligned pocketed springs of different strands. Further, more than two layers could also of the multi-layer strand could also be achieved by using the method of Fig. 9 in an iterative manner, e.g., by first forming a multi-layer strand having two layers and then using the method of Fig. 9 to connect this multi-layer strand to a further single-layer strand or to a further multi-layer strand.

It is to be understood that the illustrated machine 100, its operations, and the resulting spring core unit 50 are susceptible to various modifications, without departing from the scope of the invention as defined is the appended claims.

For example, the strands of pocketed springs could include various types of springs, including barrel shaped coil springs, cylindrical coil springs, hourglass shaped coil spring, foam spring, gel elements, or combinations of two or more of such elements. Further, the sized of the pocketed springs could vary within a strand forming the multi-layer strand. Still further, as already mentioned above, the multi-layer strand could also be formed of more than two strands, i.e., have more than two layers. Further, it is also noted that the pocketed strings of the strands, which are connected to each other to form the multi-layer strand, do not need to have a one-to-one correspondence between the strands. For example, the above-mentioned first strand 11 and second strand 12 could have different numbers of pocketed springs per length of the strand 11, 12, e.g., due to different spacing and/or diameter of the pocketed springs. As a result, for example two pocketed springs of the first strand 11 could cover the same length as three pocketed springs of the second strand 12. The connection between the strands 11, 12 could then be formed at the ends of corresponding sequences of two pocketed springs in the first strand 11 and three pocketed springs in the second strand 12.

## Claims

1. A machine (100) for forming a multi-layer strand (10) of pocketed springs (21, 22, 23), the machine (100) comprising:
an alignment mechanism (111, 111', 112, 112', 121) for receiving at least a first strand (11, 12) of pocketed springs (21, 22) and a second strand (12, 13) of pocketed springs (22, 23), the alignment mechanism being configured to align a first pocketed spring (21) of the first strand (11, 12) in a coaxial manner with a second pocketed spring (22, 23) of the second strand (12, 13) so that a first seam portion (31) of pocket material at an end of the first pocketed spring (21) overlaps with a second seam portion (32) at an end of the second pocketed spring (22, 23);
a welding mechanism (120, 121, 122, 125) configured to weld the first seam portion (31) to the second seam portion (32).

2. The machine (100) according to claim 1,
wherein the welding mechanism (120, 122, 121, 125) is based on welding of the first seam portion (31) and the second seam portion (32) between an anvil (121) and a welding tool (120).

3. The machine (100) according to claim 2,
wherein the anvil (121) engages between the first pocketed spring (21, 22) and an adjacent pocketed spring (21, 22) of the first strand (11, 12) and between the second pocketed spring (22, 23) and an adjacent pocketed spring (22, 23) of the second strand (12, 13).

4. The machine (100) according to claim 3,
wherein the anvil (121) is mounted on a wheel (130) and rotation of the wheel (130) causes transport of the first strand (11, 12) and the second strand (12, 13) between an input and an output of the machine (100).

5. The machine according to claim 4, comprising:
support elements (135, 135A, 135B) mounted on the wheel (130),
wherein the support elements (135, 135A, 135B) are configured to engage between the first pocketed spring (21) and an adjacent pocketed spring (21) of the first strand (11) and between the second pocketed spring (22) and an adjacent pocketed spring (22) of the second strand (12).

6. The machine (100) according to claims 4 or 5,
wherein the alignment mechanism (111, 111', 112, 112', 121) is configured to align each of multiple first pocketed springs (21, 22) of the first strand (11) with a corresponding one of multiple pocketed springs (22, 23) of the second strand (12, 13) so that, for each pair of first pocketed spring (21, 22) and corresponding second pocketed spring (22, 23), a first seam portion (31) of pocket material at an end of the first pocketed spring (21) overlaps with a second seam portion (32) at an end of the corresponding second pocketed spring (22, 23).

7. The machine (100) according to claim 6,
wherein the welding mechanism (121, 120) comprises multiple welding tools (120) configured to cooperate with multiple anvils (121), and
wherein each of the multiple welding tools (120) is configured to cooperate with one of the anvils (121) to weld the overlapping first and second seam portions (31, 32) of a corresponding pair of the aligned first and second pocketed springs (21, 22, 23).

8. The machine (100) according to claim 7,
wherein the welding tools (120) are each provided with a drive mechanism (125) for driving movement of the welding tool (120) with respect to the corresponding anvil (121), and
wherein the movements of the welding tools (120) are along radial directions with respect to a center of rotation of the wheel (130).

9. The machine (100) according to any one of the preceding claims,
wherein the alignment mechanism (111, 111', 112, 112') comprises a first guide member (111, 111')for guiding transport of the first strand (11, 12) of pocketed springs (21, 22) towards the welding mechanism, and a second guide member (112, 112') for guiding transport of the second strand (12, 13) of pocketed springs (22, 23) towards the welding mechanism (120, 121, 122, 125), and
wherein the first guide member (111, 111') and the second guide member (112, 112') converge at an angle towards a position where the first pocketed spring (21, 22) of the first strand (11, 12) and the second pocketed spring (22, 23) of the second strand (12, 13) become aligned.

10. A method of forming a multi-layer strand (10) of pocketed springs (21, 22), the method comprising:
receiving at least a first strand (11, 12) of pocketed springs (21, 22) and a second strand (12, 13) of pocketed springs (22, 23);
aligning a first pocketed spring (21, 22) of the first strand (11, 12) in a coaxial manner with a second pocketed spring (22, 23) of the second strand (12, 13) so that a first seam portion (31) of pocket material at an end of the first pocketed spring (21, 22) overlaps with a second seam portion (32) at an end of the second pocketed spring (22, 23); and
welding the first seam portion (31) to the second seam portion (32).

11. The method according to claim 10,
wherein said welding is based on welding of the first seam portion (31) and the second seam portion (32) between an anvil (121) and a welding tool (120), and
wherein the anvil (121) engages between the first pocketed spring (21) and an adjacent pocketed spring (21) of the first strand (11, 12) and between the second pocketed spring (22) and an adjacent pocketed spring (22) of the second strand (12, 13).

12. The method according to claim 11,
wherein the anvil (121) is mounted on a wheel (130) and the method further comprises rotation of the wheel (130) to transport of the first strand (11, 12) and the second strand (12, 13).

13. A spring core unit (50), comprising:
at least one multi-layer strand (10) of pocketed springs (21, 22, 23), the at least one multi-layer strand (10) comprising first strand (11, 12) of pocketed springs (21, 22) and a second strand (12, 13) of pocketed springs (22, 23),
wherein at least one first pocketed spring (21, 22) of the first strand (11, 12) is aligned in a coaxial manner with a corresponding second pocketed spring (22, 23) of the second strand (12, 13) so that a first seam portion (31) of pocket material at an end of the first pocketed spring (21) overlaps with a second seam portion (32) at an end of the corresponding second pocketed spring (22, 23) and the first seam portion (31) is welded to the second seam portion (32) to connect the first strand (11, 12) to the second strand (12, 13).

14. The spring core unit (50) according to claim 13, comprising:
multiple multi-layer strands (10) of pocketed springs (21, 22, 23), each of the multi-layer strands (10) comprising at least a first strand (11, 12) of pocketed springs (21, 22) and a second strand (12, 13) of pocketed springs (22, 23),
wherein in each of the multi-layer strands (10) at least one first pocketed spring (21, 22) of the first strand (11, 12) is aligned in a coaxial manner with a corresponding second pocketed spring (22, 23) of the second strand (12, 13) so that a first seam portion (31) of pocket material at an end of the first pocketed spring (21, 22) overlaps with a second seam portion (32) at an end of the corresponding second pocketed spring (22, 23) and the first seam portion (31) is welded to the second seam portion (32) to connect the first strand (11, 12) to the second strand (12, 13), and
wherein at least some of the multi-layer strands (10) differ from each other with respect to at least one characteristic of the pocketed springs (21, 22) of the first strand (11, 12) and/or at least one characteristic of the pocketed springs (22, 23) of the second strand (12, 13).

15. The spring core unit (50) according to claim 13 or 14, comprising:
at least one multi-layer strand (10) of pocketed springs (21, 22, 23), the at least one multi-layer strand (10) comprising first strand (11) of pocketed springs (21), a second strand (12) of pocketed springs (22), and a third strand (13) of pocketed springs (23),
wherein at least one first pocketed spring (21) of the first strand (11) is aligned in a coaxial manner with a corresponding second pocketed spring (22) of the second strand (12) and a corresponding third pocketed spring of the third strand (13) so that a first seam portion (31) of pocket material at an end of the first pocketed spring (21) overlaps with a second seam portion (32) at an end of the corresponding second pocketed spring (22) and a third seam portion of pocket material at another end of the corresponding second pocketed spring (22) overlaps with a fourth seam portion at an end of the corresponding third pocketed spring (23), and
wherein the first seam portion (31) is welded to the second seam portion (32) to connect the first strand (11) to the second strand (12) and the third seam portion is welded to the fourth seam portion to connect the second strand (12) to the third strand (13).

## Patentansprüche

1. Maschine (100) zum Ausbilden eines mehrschichtigen Strangs (10) von Taschenfedern (21, 22, 23), wobei die Maschine (100) umfasst:
einen Ausrichtungsmechanismus (111, 111', 112, 112', 121) zur Aufnahme mindestens eines ersten Strangs (11, 12) von Taschenfedern (21, 22) und eines zweiten Strangs (12, 13) von Taschenfedern (22, 23), wobei der Ausrichtungsmechanismus ausgestaltet ist, um eine erste Taschenfeder (21) des ersten Strangs (11, 12) koaxial mit einer zweiten Taschenfeder (22, 23) des zweiten Strangs (12, 13) auszurichten, so dass ein erster Nahtabschnitt (31) aus Taschenmaterial an einem Ende der ersten Taschenfeder (21) mit einem zweiten Nahtabschnitt (32) an einem Ende der zweiten Taschenfeder (22, 23) überlappt;
einen Schweißmechanismus (120, 121, 122, 125), der ausgestaltet ist, um den ersten Nahtabschnitt (31) mit dem zweiten Nahtabschnitt (32) zu verschweißen.

2. Maschine (100) nach Anspruch 1,
wobei der Schweißmechanismus (120, 122, 121, 125) auf einem Verschweißen des ersten Nahtabschnitts (31) und des zweiten Nahtabschnitts (32) zwischen einem Amboss (121) und einem Schweißwerkzeug (120) basiert.

3. Maschine (100) nach Anspruch 2,
wobei sich der Amboss (121) zwischen der ersten Taschenfeder (21, 22) und einer benachbarten Taschenfeder (21, 22) des ersten Strangs (11, 12) und zwischen der zweiten Taschenfeder (22, 23) und einer benachbarten Taschenfeder (22, 23) des zweiten Strangs (12, 13) in Eingriff befindet.

4. Maschine (100) nach Anspruch 3,
wobei der Amboss (121) auf einem Rad (130) montiert ist und eine Drehung des Rades (130) einen Transport des ersten Stranges (11, 12) und des zweiten Stranges (12, 13) zwischen einem Eingang und einem Ausgang der Maschine (100) bewirkt.

5. Maschine nach Anspruch 4, umfassend:
Halteelemente (135, 135A, 1358), die an dem Rad (130) angebracht sind,
wobei die Halteelemente (135, 135A, 1358) ausgestaltet sind, um sich zwischen der ersten Taschenfeder (21) und einer benachbarten Taschenfeder (21) des ersten Stranges (11) und zwischen der zweiten Taschenfeder (22) und einer benachbarten Taschenfeder (22) des zweiten Stranges (12) in Eingriff zu befinden.

6. Maschine (100) nach einem der Ansprüche 4 oder 5,
wobei der Ausrichtungsmechanismus (111, 111', 112, 112', 121) ausgestaltet ist, um jede von mehreren ersten Taschenfedern (21, 22) des ersten Strangs (11) mit einer entsprechenden von mehreren Taschenfedern (22, 23) des zweiten Strangs (12, 13) auszurichten, so dass, für jedes Paar aus einer ersten Taschenfeder (21, 22) und einer entsprechenden zweiten Taschenfeder (22, 23), ein erster Nahtabschnitt (31) aus Taschenmaterial an einem Ende der ersten Taschenfeder (21) mit einem zweiten Nahtabschnitt (32) an einem Ende der entsprechenden zweiten Taschenfeder (22, 23) überlappt.

7. Maschine (100) nach Anspruch 6,
wobei der Schweißmechanismus (121, 120) mehrere Schweißwerkzeuge (120) umfasst, die ausgestaltet sind sind, um mit mehreren Ambossen (121) zusammenwirken, und
wobei jedes der mehreren Schweißwerkzeuge (120) ausgestaltet ist, um mit einem der Ambosse (121) zusammenzuwirken, um die überlappenden ersten und zweiten Nahtabschnitte (31, 32) eines entsprechenden Paares der ausgerichteten ersten und zweiten Taschenfedern (21, 22, 23) zu verschweißen.

8. Maschine (100) nach Anspruch 7,
wobei die Schweißwerkzeuge (120) jeweils mit einem Antriebsmechanismus (125) für eine Antriebsbewegung des Schweißwerkzeugs (120) in Bezug auf den entsprechenden Amboss (121) versehen sind, und
wobei die Bewegungen der Schweißwerkzeuge (120) entlang radialer Richtungen in Bezug auf ein Drehzentrum des Rades (130) erfolgen.

9. Maschine (100) nach einem der vorhergehenden Ansprüche,
wobei der Ausrichtmechanismus (111, 111', 112, 112') ein erstes Führungselement (111, 111') zum Führen eines Transports des ersten Strangs (11, 12) von Taschenfedern (21, 22) zu dem Schweißmechanismus und ein zweites Führungselement (112, 112') zum Führen des Transports des zweiten Strangs (12, 13) von Taschenfedern (22, 23) zu dem Schweißmechanismus (120, 121, 122, 125) umfasst, und
wobei das erste Führungselement (111, 111') und das zweite Führungselement (112, 112') in einem Winkel zu einer Position konvergieren, in der die erste Taschenfeder (21, 22) des ersten Strangs (11, 12) und die zweite Taschenfeder (22, 23) des zweiten Strangs (12, 13) ausgerichtet sind.

10. Verfahren zum Bilden eines mehrschichtigen Stranges (10) von Taschenfedern (21, 22), wobei das Verfahren umfasst:
Aufnehmen mindestens eines ersten Strangs (11, 12) von Taschenfedern (21, 22) und eines zweiten Strangs (12, 13) von Taschenfedern (22, 23);
Ausrichten einer ersten Taschenfeder (21, 22) des ersten Stranges (11, 12) in einer koaxialen Weise mit einer zweiten Taschenfeder (22, 23) des zweiten Stranges (12, 13), so dass ein erster Nahtabschnitt (31) aus Taschenmaterial an einem Ende der ersten Taschenfeder (21, 22) mit einem zweiten Nahtabschnitt (32) an einem Ende der zweiten Taschenfeder (22, 23) überlappt; und Verschweißen des ersten Nahtabschnitts (31) mit dem zweiten Nahtabschnitt (32).

11. Verfahren nach Anspruch 10,
wobei das Verschweißen auf einem Verschweißen des ersten Nahtabschnitts (31) und des zweiten Nahtabschnitts (32) zwischen einem Amboss (121) und einem Schweißwerkzeug (120) basiert, und
wobei sich der Amboss (121) zwischen der ersten Taschenfeder (21) und einer benachbarten Taschenfeder (21) des ersten Strangs (11, 12) und zwischen der zweiten Taschenfeder (22) und einer benachbarten Taschenfeder (22) des zweiten Strangs (12, 13) in Eingriff befindet.

12. Verfahren nach Anspruch 11,
wobei der Amboss (121) auf einem Rad (130) montiert ist, und wobei das Verfahren darüber hinaus eine Drehung des Rades (130) umfasst, um den ersten Strang (11, 12) und den zweiten Strang (12, 13) zu transportieren.

13. Federkerneinheit (50) umfassend:
mindestens einen mehrschichtigen Strang (10) von Taschenfedern (21, 22, 23),
wobei der mindestens eine mehrschichtige Strang (10) einen ersten Strang (11, 12) von Taschenfedern (21, 22) und einen zweiten Strang (12, 13) von Taschenfedern (22, 23) umfasst,
wobei mindestens eine erste Taschenfeder (21, 22) des ersten Strangs (11, 12) koaxial zu einer entsprechenden zweiten Taschenfeder (22, 23) des zweiten Strangs (12, 13) ausgerichtet ist, so dass ein erster Nahtabschnitt (31) aus Taschenmaterial an einem Ende der ersten Taschenfeder (21) mit einem zweiten Nahtabschnitt (32) an einem Ende der entsprechenden zweiten Taschenfeder (22, 23) überlappt und der erste Nahtabschnitt (31) mit dem zweiten Nahtabschnitt (32) verschweißt wird, um den ersten Strang (11, 12) mit dem zweiten Strang (12, 13) zu verbinden.

14. Federkerneinheit (50) nach Anspruch 13, umfassend:
mehrere mehrschichtige Stränge (10) von Taschenfedern (21, 22, 23), wobei jeder der mehrschichtigen Stränge (10) mindestens einen ersten Strang (11, 12) von Taschenfedern (21, 22) und einen zweiten Strang (12, 13) von Taschenfedern (22, 23) umfasst,
wobei in jedem der mehrschichtigen Stränge (10) mindestens eine erste Taschenfeder (21, 22) des ersten Strangs (11, 12) koaxial mit einer entsprechenden zweiten Taschenfeder (22, 23) des zweiten Strangs (12, 13) ausgerichtet ist, so dass ein erster Nahtabschnitt (31) aus Taschenmaterial an einem Ende der ersten Taschenfeder (21, 22) mit einem zweiten Nahtabschnitt (32) an einem Ende der entsprechenden zweiten Taschenfeder (22, 23) überlappt und der erste Nahtabschnitt (31) mit dem zweiten Nahtabschnitt (32) verschweißt ist, um den ersten Strang (11, 12) mit dem zweiten Strang (12, 13) zu verbinden, und
wobei sich zumindest einige der mehrschichtigen Stränge (10) hinsichtlich mindestens einer Eigenschaft der Taschenfedern (21, 22) des ersten Strangs (11, 12) und/oder mindestens einer Eigenschaft der Taschenfedern (22, 23) des zweiten Strangs (12, 13) voneinander unterscheiden.

15. Federkerneinheit (50) nach Anspruch 13 oder 14, umfassend:
mindestens einen mehrschichtigen Strang (10) von Taschenfedern (21, 22, 23), wobei der mindestens eine mehrschichtige Strang (10) einen ersten Strang (11) von Taschenfedern (21), einen zweiten Strang (12) von Taschenfedern (22) und einen dritten Strang (13) von Taschenfedern (23) umfasst,
wobei mindestens eine erste Taschenfeder (21) des ersten Strangs (11) koaxial mit einer entsprechenden zweiten Taschenfeder (22) des zweiten Strangs (12) und einer entsprechenden dritten Taschenfeder des dritten Strangs (13) ausgerichtet ist, so dass ein erster Nahtabschnitt (31) aus Taschenmaterial an einem Ende der ersten Taschenfeder (21) mit einem zweiten Nahtabschnitt (32) an einem Ende der entsprechenden zweiten Taschenfeder (22) überlappt und ein dritter Nahtabschnitt aus Taschenmaterial an einem anderen Ende der entsprechenden zweiten Taschenfeder (22) mit einem vierten Nahtabschnitt an einem Ende der entsprechenden dritten Taschenfeder (23) überlappt,
wobei der erste Nahtabschnitt (31) mit dem zweiten Nahtabschnitt (32) verschweißt ist, um den ersten Strang (11) mit dem zweiten Strang (12) zu verbinden, und wobei der dritte Nahtabschnitt mit dem vierten Nahtabschnitt verschweißt ist, um den zweiten Strang (12) mit dem dritten Strang (13) zu verbinden.

## Revendications

1. Machine (100) destinée à former un brin multicouche (10) de ressorts ensachés (21, 22, 23), la machine (100) comprenant :
un mécanisme d'alignement (111, 111', 112, 112', 121) permettant la réception d'au moins un premier brin (11, 12) de ressorts ensachés (21,22) et d'un deuxième brin (12, 13) de ressorts ensachés (22, 23), le mécanisme d'alignement étant conçu pour aligner un premier ressort ensaché (21) du premier brin (11, 12) de manière coaxiale avec un deuxième ressort ensaché (22, 23) du deuxième brin (12, 13) de sorte qu'une première partie de couture (31) de tissu des sachets à une extrémité du premier ressort ensaché (21) chevauche une deuxième partie de couture (32) à une extrémité du deuxième ressort ensaché (22, 23) ;
un mécanisme de soudage (120, 121, 122, 125) conçu pour souder la première partie de couture (31) à la deuxième partie de couture (32).

2. Machine (100) selon la revendication 1,
dans laquelle le mécanisme de soudage (120, 122, 121, 125) est basé sur le soudage de la première partie de couture (31) et de la deuxième partie de couture (32) entre une enclume (121) et un outil de soudage (120).

3. Machine (100) selon la revendication 2,
dans laquelle l'enclume (121) s'enclenche entre le premier ressort ensaché (21, 22) et un ressort ensaché adjacent (21, 22) du premier brin (11, 12) et entre le deuxième ressort ensaché (22, 23) et un ressort ensaché adjacent (22, 23) du deuxième brin (12, 13).

4. Machine (100) selon la revendication 3,
dans laquelle l'enclume (121) est montée sur une roue (130) et une rotation de la roue (130) entraîne le transport du premier brin (11, 12) et du deuxième brin (12, 13) entre une entrée et une sortie de la machine (100).

5. Machine selon la revendication 4, comprenant :
des éléments de support (135, 135A, 135B) montés sur la roue (130),
dans laquelle les éléments de support (135, 135A, 135B) sont conçus pour s'enclencher entre le premier ressort ensaché (21) et un ressort ensaché adjacent (21) du premier brin (11) et entre le deuxième ressort ensaché (22) et un ressort ensaché adjacent (22) du deuxième brin (12).

6. Machine (100) selon les revendications 4 ou 5,
dans laquelle le mécanisme d'alignement (111, 111', 112, 112', 121) est conçu pour aligner chacun des multiples premiers ressorts ensachés (21, 22) du premier brin (11) avec l'un correspondant de multiples ressorts ensachés (22, 23) du deuxième brin (12, 13) de sorte que, pour chaque paire de premier ressort ensaché (21, 22) et de deuxième ressort ensaché correspondant (22, 23), une première partie de couture (31) de tissu des sachets à une extrémité du premier ressort ensaché (21) chevauche une deuxième partie de couture (32) à une extrémité du deuxième ressort ensaché correspondant (22, 23).

7. Machine (100) selon la revendication 6,
dans laquelle le mécanisme de soudage (121, 120) comprend de multiples outils de soudage (120) conçus pour coopérer avec de multiples enclumes (121), et
dans laquelle chacun des multiples outils de soudage (120) est conçu pour coopérer avec l'une des enclumes (121) pour souder les première et deuxième parties de couture se chevauchant (31, 32) d'une paire correspondante des premier et deuxième ressorts ensachés alignés (21, 22, 23).

8. Machine (100) selon la revendication 7,
dans laquelle les outils de soudage (120) sont chacun dotés d'un mécanisme d'entraînement (125) destiné à entraîner un mouvement de l'outil de soudage (120) par rapport à l'enclume correspondante (121), et
dans laquelle les mouvements des outils de soudage (120) sont le long de directions radiales par rapport à un centre de rotation de la roue (130).

9. Machine (100) selon l'une quelconque des revendications précédentes,
dans laquelle le mécanisme d'alignement (111, 111', 112, 112') comprend un premier élément de guidage (111, 111') permettant de guider le transport du premier brin (11, 12) de ressorts ensachés (21, 22) vers le mécanisme de soudage, et un second élément de guidage (112, 112') permettant de guider le transport du deuxième brin (12, 13) de ressorts ensachés (22, 23) vers le mécanisme de soudage (120, 121, 122, 125), et
dans laquelle le premier élément de guidage (111, 111') et le second élément de guidage (112, 112') convergent à un angle vers une position où le premier ressort ensaché (21, 22) du premier brin (11, 12) et le deuxième ressort ensaché (22, 23) du deuxième brin (12, 13) deviennent alignés.

10. Procédé de formation d'un brin multicouche (10) de ressorts ensachés (21, 22), le procédé comprenant :
la réception d'au moins un premier brin (11, 12) de ressorts ensachés (21, 22) et d'un deuxième brin (12, 13) de ressorts ensachés (22, 23) ;
l'alignement d'un premier ressort ensaché (21, 22) du premier brin (11, 12) de manière coaxiale avec un deuxième ressort ensaché (22, 23) du deuxième brin (12, 13) de sorte qu'une première partie de couture (31) de tissu des sachets à une extrémité du premier ressort ensaché (21, 22) chevauche une deuxième partie de couture (32) à une extrémité du deuxième ressort ensaché (22, 23) ; et
le soudage de la première partie de couture (31) à la deuxième partie de couture (32).

11. Procédé selon la revendication 10,
dans lequel ledit soudage est basé sur le soudage de la première partie de couture (31) et de la deuxième partie de couture (32) entre une enclume (121) et un outil de soudage (120), et
dans lequel l'enclume (121) s'enclenche entre le premier ressort ensaché (21) et un ressort ensaché adjacent (21) du premier brin (11, 12) et entre le deuxième ressort ensaché (22) et un ressort ensaché adjacent (22) du deuxième brin (12, 13).

12. Procédé selon la revendication 11,
dans lequel l'enclume (121) est montée sur une roue (130) et le procédé comprend en outre une rotation de la roue (130) permettant de transporter le premier brin (11, 12) et le deuxième brin (12, 13).

13. Unité centrale à ressort (50), comprenant :
au moins un brin multicouche (10) de ressorts ensachés (21, 22, 23), l'au moins un brin multicouche (10) comprenant un premier brin (11, 12) de ressorts ensachés (21, 22) et un deuxième brin (12, 13) de ressorts ensachés (22, 23),
dans laquelle au moins un premier ressort ensaché (21, 22) du premier brin (11, 12) est aligné de manière coaxiale avec un deuxième ressort ensaché correspondant (22, 23) du deuxième brin (12, 13) de sorte qu'une première partie de couture (31) de tissu des sachets à une extrémité du premier ressort ensaché (21) chevauche une deuxième partie de couture (32) à une extrémité du deuxième ressort ensaché correspondant (22, 23) et la première partie de couture (31) est soudée à la deuxième partie de couture (32) pour relier le premier brin (11, 12) au deuxième brin (12, 13).

14. Unité centrale à ressort (50) selon la revendication 13, comprenant :
de multiples brins multicouches (10) de ressorts ensachés (21, 22, 23), chacun des brins multicouches (10) comprenant au moins un premier brin (11, 12) de ressorts ensachés (21,22) et un deuxième brin (12, 13) de ressorts ensachés (22, 23),
dans laquelle dans chacun des brins multicouches (10) au moins un premier ressort ensaché (21,22) du premier brin (11, 12) est aligné de manière coaxiale avec un deuxième ressort ensaché correspondant (22, 23) du deuxième brin (12, 13) de sorte qu'une première partie de couture (31) de tissu des sachets à une extrémité du premier ressort ensaché (21, 22) chevauche une deuxième partie de couture (32) à une extrémité du deuxième ressort ensaché correspondant (22, 23) et la première partie de couture (31) est soudée à la deuxième partie de couture (32) pour relier le premier brin (11, 12) au deuxième brin (12, 13), et
dans laquelle au moins certains des brins multicouches (10) diffèrent les uns des autres par rapport à au moins une caractéristique des ressorts ensachés (21,22) du premier brin (11, 12) et/ou à au moins une caractéristique des ressorts ensachés (22, 23) du deuxième brin (12, 13).

15. Unité centrale à ressort (50) selon la revendication 13 ou 14, comprenant :
au moins un brin multicouche (10) de ressorts ensachés (21,22, 23), l'au moins un brin multicouche (10) comprenant un premier brin (11) de ressorts ensachés (21), un deuxième brin (12) de ressorts ensachés (22), et un troisième brin (13) de ressorts ensachés (23),
dans laquelle au moins un premier ressort ensaché (21) du premier brin (11) est aligné de manière coaxiale avec un deuxième ressort ensaché correspondant (22) du deuxième brin (12) et un troisième ressort ensaché correspondant du troisième brin (13) de sorte qu'une première partie de couture (31) de tissu des sachets à une extrémité du premier ressort ensaché (21) chevauche une deuxième partie de couture (32) à une extrémité du deuxième ressort ensaché correspondant (22) et une troisième partie de couture de tissu des sachets à une autre extrémité du deuxième ressort ensaché correspondant (22) chevauche une quatrième partie de couture à une extrémité du troisième ressort ensaché correspondant (23), et
dans laquelle la première partie de couture (31) est soudée à la deuxième partie de couture (32) pour relier le premier brin (11) au deuxième brin (12) et la troisième partie de couture est soudée à la quatrième partie de couture pour relier le deuxième brin (12) au troisième brin (13).
